# EUROPÄISCHE PATENTANMELDUNG

(11) **EP 1 645 927 A2**
(43) Veröffentlichungstag der Anmeldung: **12.04.2006**
(21) Anmeldenummer: 05021565.6
(22) Anmeldetag: 01.10.2005
(51) Int. Cl.: G05D 16/10

(54) **Hydraulisch schaltbares Druckminderventil und Verfahren zum Betreiben eines hydraulisch schaltbaren Druckminderventils**

(30) Priorität: 09.10.2004 DE 102004049325
(71) Anmelder: ZF FRIEDRICHSHAFEN AG, 88038 Friedrichshafen (DE)
(72) Erfinder: Huber, Roland, 4391 Waldhausen (AT)

(57) **Zusammenfassung**

Es wird ein hydraulisch schaltbares Druckminderventil zur Druckregelung mindestens einer Arbeitsleitung vorgeschlagen, umfassend einen in einer Hülse/einem Gehäuse (2) angeordneten Schieber (2), der axial betrachtet zwischen einem Verschlussdeckel (3) und einer Feder (4) angeordnet ist, wobei die Hülse/das Gehäuse (2) seitliche Anschlüsse für die Druckversorgungsleitung (7) und die Arbeitsleitung (8) aufweist und wobei eine Steuerkante K1 (Druckversorgungsleitung - Arbeitsleitung) und eine Steuerkante K2 (Arbeitsleitung - Tank) vorgesehen ist, bei dem der Anschluss für die Arbeitsleitung (8) axial betrachtet zwischen der Feder (4) und der Druckversorgungsleitung (7) angeordnet ist, derart, dass der Druck in der Arbeitsleitung (8) in Abhängigkeit von den Flächenverhältnissen des Schiebers (2) und der Kraft der Feder (4) einstellbar bzw. regelbar ist, wobei der Schieber (2) im Neutralzustand die Kante K2 geöffnet und die Kante K1 geschlossen hält, beim Befüllen der Arbeitsleitung (8) durch den Druck der Druckversorgungsleitung (7) gegen die Kraft der Feder (4) die Kante K1 geöffnet und die Kante K2 geschlossen hält und im Zustand Regeln durch seine Bewegung die Kanten K1 bzw. K2 öffnet bzw. schließt, derart, dass das Gleichgewicht zwischen dem Druck in der Druckversorgungsleitung (7) und der durch den gewünschten Druck in der Arbeitsleitung (8) unterstützten Federkraft aufrechterhalten bleibt.

## Beschreibung

Die vorliegende Erfindung betrifft ein hydraulisch schaltbares Druckminderventil gemäß dem Oberbegriff des Patentanspruchs 1. Des weiteren betrifft die Erfindung ein Verfahren zum Betreiben des erfindungsgemäßen hydraulisch schaltbaren Druckminderventils.

Aus dem Stand der Technik sind Druckminderventile bekannt. Beispielsweise wird im Rahmen der DD 275 901 A1 ein Mehrfachfunktionsventil mit Druckbegrenzungs- und Einspeisefunktionen beschrieben, welches auf der Hochdruckseite einer Pumpe als Druckbegrenzungsventil und auf der Niederdruckseite als Einspeiseventil arbeitet. Dieses Ventil ist derart ausgebildet, dass im Hauptsteuerschieber neben dem Einspeiseschieber ein weiterer Steuerschieber angeordnet ist, der mit den Stellzylindern der Pumpe in Verbindung stehende Bohrungen steuert.

Der vorliegenden Erfindung liegt die Aufgabe zugrunde, ein Druckminderventil anzugeben, welches mittels Systemdruck schaltet, eine relativ kurze Füllzeit in den Verbraucherleitungen erreicht und gleichzeitig die Druckregelung mindestens eines Verbraucherkanals übernimmt, wobei die Verbraucherleitung von mindestens einem Endverbraucher benötigt wird. Ein weiteres Ziel der Erfindung ist es, ein Verfahren zum Betreiben des hydraulisch schaltbaren Druckminderventils gemäß der Erfindung anzugeben.

Diese Aufgabe wird durch die Merkmale des Patentanspruchs 1 gelöst. Ein Verfahren zum Betreiben eines hydraulisch schaltbaren Druckminderventils ist Gegenstand des Patentanspruchs 10. Weitere erfindungsgemäße Ausgestaltungen und Vorteile gehen aus den entsprechenden Unteransprüchen hervor.

Demnach wird ein Druckminderventil vorgeschlagen, bei dem zur Druckreduzierung Differenzflächen verwendet werden, umfassend einen in einer Hülse/einem Gehäuse angeordneten Schieber, der axial betrachtet zwischen einem Verschlussdeckel und einer Feder angeordnet ist, wobei die Hülse/das Gehäuse seitliche Anschlüsse für die Hochdruckleitung und die Arbeitsleitung aufweist und wobei eine Steuerkante K1 (Druckversorgungseitung - Arbeitsleitung) und eine Steuerkante K2 (Arbeitsleitung - Tank) vorgesehen ist.

Hierbei ist der Anschluss für die Arbeitsleitung axial betrachtet zwischen der Feder und der Druckversorgungsleitung angeordnet, derart, dass der Druck in der Arbeitsleitung in Abhängigkeit von den Flächenverhältnissen des Schiebers und der Kraft der Feder einstellbar bzw. regelbar ist, wobei der Schieber im Neutralzustand die Kante K2 geöffnet und die Kante K1 geschlossen hält, beim Befüllen der Arbeitsleitung durch den Druck der Druckversorgungsleitung gegen die Kraft der Feder die Kante K1 geöffnet und die Kante K2 geschlossen hält und im Zustand Regeln durch seine Bewegung die Kanten K1 bzw. K2 öffnet bzw. schließt, derart, dass das Gleichgewicht zwischen dem Druck in der Druckversorgungsleitung und der durch den gewünschten Druck in der Arbeitsleitung unterstützten Federkraft aufrechterhalten bleibt.

Der Schieber des erfindungsgemäßen Druckminderventils ist aufgrund des Flächenverhältnisses maßgeblich bestimmend für das Druckverhältnis; die Hülse/das Gehäuse kann als separater Teil gefertigt werden, wobei gemäß einer vorteilhaften Weiterbildung der Erfindung die Steuerkanten des Ventils in das Gehäuse integriert sein können. Des weiteren weist der Verschlussdeckel des Ventils einen Endanschlag auf, der benötigt wird, damit der Schieber sich nicht in die obere Endposition begeben kann und somit das Öffnungsverhalten der Steuerkanten negativ beeinflusst.

Die Feder des Ventils dient der Rückstellung des Schiebers in die Endposition, wobei unter Berücksichtigung des Flächenverhältnisses die Federkraft bzw. Vorspannung in vorteilhafter Weise relativ gering gehalten werden kann, derart, dass ein unverzögerter Füllvorgang gewährleistet wird. Gemäß der Erfindung kann vorgesehen sein, das Druckniveau mittels voreinstellbarer, geänderter Federkraft zu beeinflussen; auf diese Weise kann damit eine Füllverzögerung erzielt werden.

Ein typisches Anwendungsbeispiel der erfindungsgemäßen Druckminderventils ist die Regelung der hinteren Differentialsperre (30 bar möglich) und der vorderen Differentialsperre (20 bar erlaubt) eines Schleppertriebwerkes.

Die Erfindung wird im Folgenden anhand der beigefügten Figuren beispielhaft näher erläutert. Es stellen dar:
- Figur 1: eine schematische Schnittansicht des erfindungsgemäßen Druckminderventils im Zustand Neutral, wobei der Schieber um 90° um seine Längsachse gedreht dargestellt ist;
- Figur 2: eine schematische Schnittansicht des erfindungsgemäßen Druckminderventils im Zustand Füllen, wobei der Schieber um 90° um seine Längsachse gedreht dargestellt ist; und
- Figur 3: eine schematische Schnittansicht des erfindungsgemäßen Druckminderventils im Zustand Regeln, wobei der Schieber um 90° um seine Längsachse gedreht dargestellt ist.

Die nachfolgende Beschreibung bezieht sich auf einen Kanal p30, 7 (∼30 bar) und einen Kanal p20, 8 (∼20 bar) zur Regelung der hinteren Differentialsperre (30 bar möglich) und der vorderen Differentialsperre (20 bar erlaubt) eines Schleppertriebwerkes und steht stellvertretend für die verschiedenen Einsatzmöglichkeiten des Ventils.

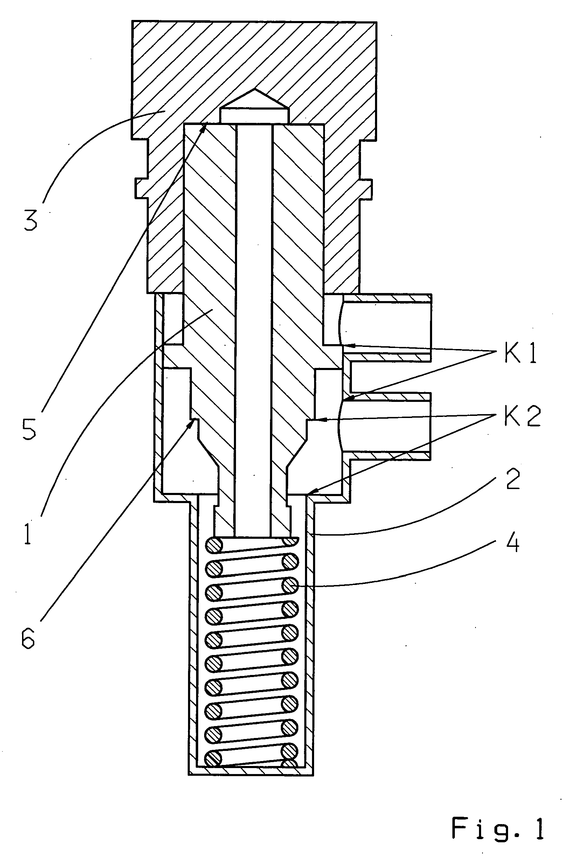

In Figur 1 ist die Neutralstellung des erfindungsgemäßen Ventils gezeigt, bei der die Feder 4 den Schieber 1 gegen den oberen Endanschlag 5 drückt. In dieser Position ist die Kante K1 (p30-p20) geschlossen und die Kante K2 (p20 -Tank) ist geöffnet.

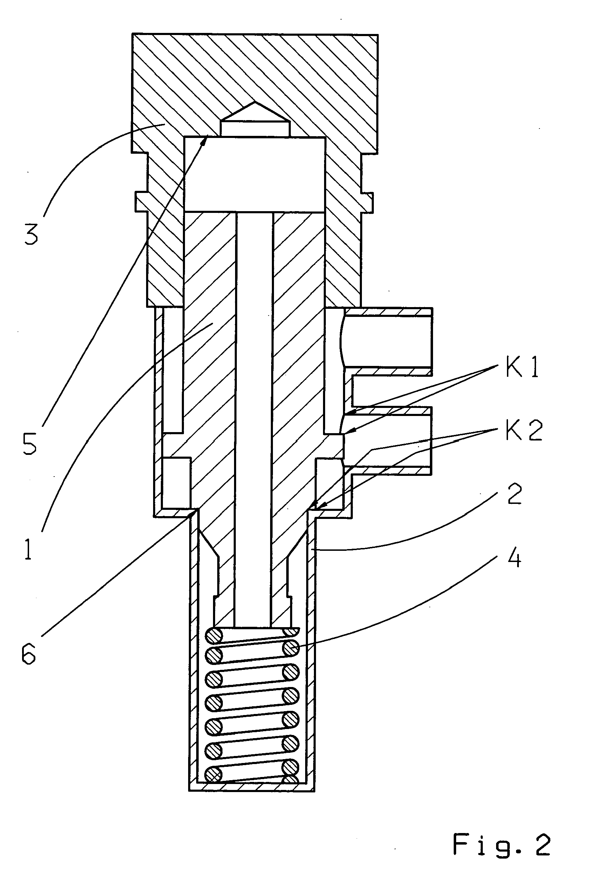

Wenn der Kanal p30 mit Druck beaufschlagt wird, wirkt eine Kraft gegen die Kraft der Feder 4 und bewirkt ein Öffnen der Steuerkante K1 und ein Schließen der Kante K2, derart, dass der Füllvorgang des Kanals p20 bzw. der Arbeitsleitung 8 beginnt. Hierbei wird der Schieber gegen den unteren Endanschlag 6 gedrückt. Diese Situation ist Gegenstand der Figur 2.

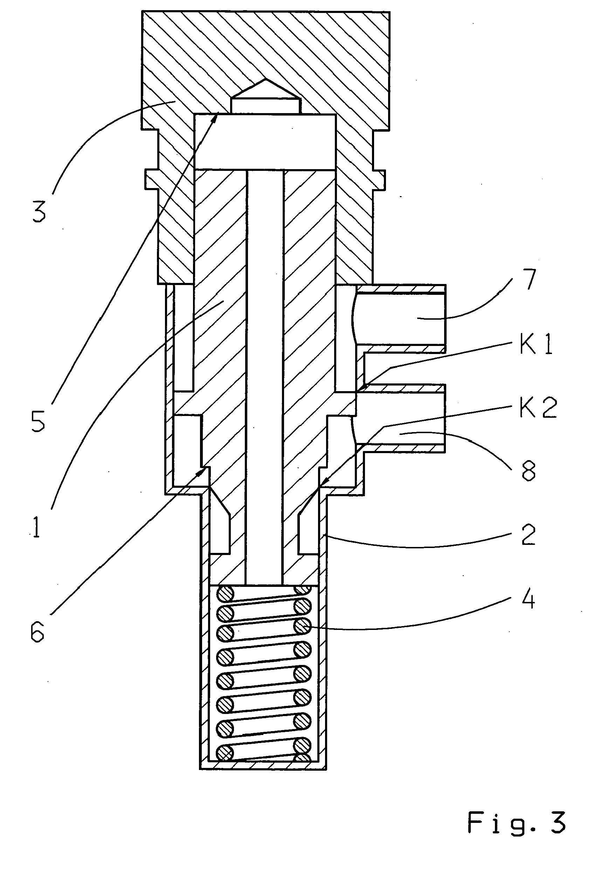

Wenn der Füllvorgang abgeschlossen ist, beginnt der Druckaufbau im Kanal p20. Der sich aufbauende Druck im Kanal p20 unterstützt die Federkraft der Feder 4 gegen die Kraft aus dem mit Druck beaufschlagten Kanal p30. Bei Erreichen des gewünschten Drucks wird der Schieber in Richtung des oberen Endanschlags bewegt und öffnet die Steuerkante K2 bei gleichzeitigem Verschließen der Steuerkante K1. Wenn der Druck unterhalb des gewünschten Wertes fällt, überwiegt der Druck im Kanal p30 (Druckversorgungsleitung 7), so dass die Kante K2 geschlossen und die Kante K1 geöffnet wird, damit der gewünschte Druck aufgebaut werden kann. Dieser Vorgang wiederholt sich permanent, wodurch die Druckregelung realisiert wird. Der Zustand der Druckregelung ist in Figur 3 veranschaulicht.

Zum Druckabbau wird die Druckleitung p30 entlastet, wodurch sich der Schieber in Richtung des oberen Endanschlags 5 bewegt. Dies bedeutet, dass die Steuerkante K2 geöffnet und die Steuerkante K2 geschlossen wird; somit beginnt der Druckabbau im Kanal p20. Ist der Schieber in der Endposition, so ist die Steuerkante K2 vollständig geöffnet, was in einer raschen Entleerung des Kanals p20 resultiert.

Die Reihenfolge des Öffnens/Schließens (basierend auf den Überdeckungen negativ/positiv) der Steuerkanten kann in Abhängigkeit von der Anwendung gestaltet werden, wobei je nach Anwendung eine positive oder eine negative Überdeckung der Steuerkanten K1/K2 benötigt wird.

Die hier beschriebene negative Überdeckung führt zu einer permanenten Regelung. Dies bedeutet einerseits eine höhere Regelungsleckagemenge und andererseits ein besseres Regelungsverhalten. Dahingegen resultiert eine positive Überdeckung der Steuerkanten in geringeren Regelungsleckagen und in einem weniger exakten Regelverhalten.

Die Vorspannung der Feder und somit die Regelvoreinstellung kann durch eine einstellbare Position des Endanschlages oder ähnliche Vorspannungsmöglichkeiten variiert werden. Es ist aber auch möglich, die Position der Steuerkante K2 und somit auch die Federvorspannung variabel zu gestalten.

Selbstverständlich fällt auch jede konstruktive Ausbildung, insbesondere jede räumliche Anordnung der erfindungsgemäßen Bauteile an sich sowie zueinander und soweit technisch sinnvoll, unter den Schutzumfang der vorliegenden Ansprüche, ohne die Funktion des Druckminderventils, wie sie in den Ansprüchen angegeben ist, zu beeinflussen, auch wenn diese Ausbildungen nicht explizit in den Figuren oder in der Beschreibung dargestellt sind.

### Bezugszeichen

- 1: Schieber
- 2: Hülse/Gehäuse
- 3: Verschlussdeckel
- 4: Feder
- 5: Endanschlag oben
- 6: Endanschlag unten
- 7: Druckversorgungsleitung
- 8: Arbeitsleitung
- K1: Steuerkante
- K2: Steuerkante

## Patentansprüche

1. Hydraulisch schaltbares Druckminderventil zur Druckregelung mindestens einer Arbeitsleitung, umfassend einen in einer Hülse/einem Gehäuse angeordneten Schieber, der axial betrachtet zwischen einem Verschlussdeckel und einer Feder angeordnet ist, wobei die Hülse/das Gehäuse seitliche Anschlüsse für die für die Druckversorgungsleitung und die Arbeitsleitung aufweist und wobei eine Steuerkante K1 (Druckversorgungsleitung - Arbeitsleitung) und eine Steuerkante K2 (Arbeitsleitung - Tank) vorgesehen ist, **dadurch gekennzeichnet , dass** der Anschluss für die Arbeitsleitung (8) axial betrachtet zwischen der Feder (4) und der Druckversorgungsleitung (7) angeordnet ist, derart, dass der Druck in der Arbeitsleitung (8) in Abhängigkeit von den Flächenverhältnissen des Schiebers (2) und der Kraft der Feder (4) einstellbar bzw. regelbar ist, wobei der Schieber (2) im Neutralzustand die Kante K2 geöffnet und die Kante K1 geschlossen hält, beim Befüllen der Arbeitsleitung (8) durch den Druck der Druckversorgungsleitung (7) gegen die Kraft der Feder (4) die Kante K1 geöffnet und die Kante K2 geschlossen hält und im Zustand Regeln durch seine Bewegung die Kanten K1 bzw. K2 öffnet bzw. schließt, derart, dass das Gleichgewicht zwischen dem Druck in der Druckversorgungsleitung (7) und der durch den gewünschten Druck in der Arbeitsleitung (8) unterstützten Federkraft aufrechterhalten bleibt.

2. Hydraulisch schaltbares Druckminderventil nach Anspruch 1, **dadurch gekennzeichnet , dass** der Verschlussdeckel (3) einen oberen Endanschlag (5) und der Schieber (2) einen unteren Endanschlag (6) aufweist, wobei der Schieber (2) im Neutralzustand durch die Kraft der Feder (4) gegen den oberen Endanschlag (5) des Verschlussdeckels (3) gedrückt wird und beim Befüllen der Arbeitsleitung (8) gegen den unteren Endanschlag (6) gedrückt wird.

3. Hydraulisch schaltbares Druckminderventil nach Anspruch 1 oder 2, **dadurch gekennzeichnet, dass** die Steuerkanten (K1, K2) des Ventils in die Hülse/das Gehäuse (2) integriert sind.

4. Hydraulisch schaltbares Druckminderventil nach Anspruch 1, 2 oder 3, **dadurch gekennzeichnet, dass** die Flächenverhältnisse des Schiebers (2) derart gestaltet sind, dass die Federkraft bzw. Vorspannung gering ist, um einen unverzögerten Füllvorgang der Arbeitsleitung (8) zu gewährleisten.

5. Hydraulisch schaltbares Druckminderventil nach Anspruch 1, 2, 3 oder 4, **dadurch gekennzeichnet , dass** das einstellbare Druckniveau in der Arbeitsleitung (8) mittels voreinstellbarer Federkraft beeinflussbar ist.

6. Hydraulisch schaltbares Druckminderventil nach einem der vorangehenden Ansprüche, **dadurch gekennzeichnet , dass** in Abhängigkeit von der Federkraft bzw. Vorspannung eine Füllverzögerung der Arbeitsleitung erzielbar ist.

7. Hydraulisch schaltbares Druckminderventil nach einem der vorangehenden Ansprüche, **dadurch gekennzeichnet , dass** der untere Endanschlag (6) in seiner Position einstellbar ist, derart, dass die Vorspannung der Feder (4) und somit die Regelvoreinstellung variierbar ist.

8. Hydraulisch schaltbares Druckminderventil nach einem der vorangehenden Ansprüche, **dadurch gekennzeichnet , dass** die Position der Steuerkante K2 und somit auch die Federvorspannung variabel gestaltbar ist.

9. Verwendung eines hydraulisch schaltbaren Druckminderventils nach einem der vorangehenden Ansprüche zur Regelung des Drucks der hinteren Differentialsperre und der vorderen Differentialsperre eines Schleppertriebwerkes.

10. Verfahren zum Betreiben eines hydraulisch schaltbaren Druckminderventils nach einem der vorangehenden Ansprüche 1 bis 8, **dadurch gekennzeichnet, dass** zum Befüllen der Arbeitsleitung (8) die Druckversorgungsleitung (7) mit Druck beaufschlagt wird, so dass eine Kraft gegen die Kraft der Feder (4) wirkt, welche ein Öffnen der Steuerkante K1 und ein Schließen der Steuerkante K2 bewirkt, wobei, wenn der Füllvorgang abgeschlossen ist, der Druckaufbau in der Arbeitsleitung (8) beginnt, derart, dass der sich aufbauende Druck die Federkraft der Feder (4) gegen die Kraft aus der mit Druck beaufschlagten Druckversorgungsleitung (7) unterstützt, wobei bei Erreichen des gewünschten Druckes der Schieber (2) in Richtung des oberen Endanschlags (5) bewegt wird und die Steuerkante K2 bei gleichzeitigem Verschließen der Steuerkante K1 öffnet und wobei, wenn der Druck unterhalb des gewünschten Wertes fällt, der Druck in der Druckversorgungsleitung (7) überwiegt, so dass die Kante K2 geschlossen und die Kante K1 geöffnet wird, damit der gewünschte Druck aufgebaut werden kann.

11. Verfahren zum Betreiben eines hydraulisch schaltbaren Druckminderventils nach Anspruch 10, **dadurch gekennzeichnet , dass** zum Druckabbau in der Arbeitsleitung (8) die Druckversorgungsleitung (7) entlastet wird, wodurch sich der Schieber derart bewegt, dass die Steuerkante K2 geöffnet und die Steuerkante K2 geschlossen wird.

12. Verfahren zum Betreiben eines hydraulisch schaltbaren Druckminderventils nach Anspruch 10 oder 11, **dadurch gekennzeichnet , dass** die Reihenfolge des Öffnens/Schließens der Steuerkanten in Abhängigkeit von der Anwendung gestaltet werden kann, wobei je nach Anwendung eine positive oder eine negative Überdeckung der Steuerkanten realisiert wird.
